# FASCICULE DE BREVET EUROPEEN

(11) **EP 0 465 332 B1**
(45) Date de publication et mention de la délivrance du brevet: **01.03.1995**
(21) Numéro de dépôt: 91401791.8
(22) Date de dépôt: 01.07.1991
(51) Int. Cl.: B60S 1/32, B60S 1/38

(54) **Balai d'essuie-glace caréné**
Verkleidetes Scheibenwischerblatt
Streamlined windscreen wiper blade

(30) Priorité: 05.07.1990 FR 9008544
(43) Date de publication de la demande: 08.01.1992
(73) Titulaire: VALEO SYSTEMES D'ESSUYAGE, 78180 Montigny-Le-Bretonneux (FR)
(72) Inventeur: Berge, Gilles, F-78120 Clairefontaine-en-Yvelines (FR); Henry, Claude, F-94520 Champigny-sur-Marne (FR); Eustache, Jean-Pierre, F-92160 Antony (FR)
(74) Mandataire: Gamonal, Didier

(56) Documents cités:
- EP-A- 0 280 149
- WO-A-90/08055
- DE-A- 3 125 625
- DE-A- 3 532 535
- FR-A- 2 526 382
- FR-A- 2 653 083

## Description

La présente invention a pour objet un balai d'essuie-glace destiné en particulier, mais non exclusivement, aux véhicules automobiles.

On sait que, pour l'essuyage des surfaces vitrées soumises aux aspersions, on utilise, afin de maintenir une bonne visibilité à travers lesdites surfaces vitrées, des essuie-glaces à mouvement alternatif qui frottent les surfaces à balayer au moyen d'un balai d'essuie-glace. Le balai d'essuie-glace est généralement entraîné, par l'intermédiaire d'une articulation appropriée, par un bras d'essuie-glace lui-même entraîné par un mécanisme auquel il est relié. Ce bras d'essuie-glace est le plus souvent entraîné dans un mouvement rotatif alternatif par l'arbre de sortie d'un mécanisme d'entraînement porté par la carrosserie du véhicule, une tête percée d'un alésage venant s'assembler sur ledit arbre de sortie et étant reliée au bras d'essuie-glace par l'intermédiaire d'un carénage.

Dans les balais d'essuie-glaces, une articulation cylindrique généralement constituée par un rivet est aménagée entre la tête et le carénage.

Un ressort est interposé entre le bras ou le carénage d'une part et la tête d'autre part afin d'appliquer, au cours du fonctionnement, le balai d'essuie-glace avec une certaine pression contre le pare-brise à balayer.

Comme cela est mieux décrit dans le document EP-A-0280 149 le carénage a généralement une section transversale en forme de U inversé et il renferme entre ses ailes le ressort précité qui peut travailler selon les réalisations soit en compression ou soit en traction.

L'armature du balai est solidarisée avec une lame souple qui vient en contact avec la vitre à nettoyer.

Une condition essentielle d'un bon fonctionnement de l'essuie-glace est l'existence d'une répartition uniforme de la pression exercée sur la vitre sur toute la longueur de la lame d'essuyage. Le problème est d'autant plus compliqué que les pare-brise des véhicules modernes sont en général bombés. Afin d'obtenir une telle répartition, il est connu de relier la lame d'essuyage à l'armature du balai par l'intermédiaire d'étriers, palonniers ou balanciers à deux branches. Ces éléments balanciers sont montés pivotants sur l'armature du balai et ainsi, par un ajustement de position, permettent une répartition sensiblement uniforme de pression.

Un exemple d'un tel ensemble est décrit et représenté dans FR-A-2 618 398 dans lequel une série de biellettes est articulée sur l'armature. Malheureusement, cette structure si elle donne satisfaction dans la répartition de la pression présente un aspect peu esthétique. Et, par ailleurs, les nombreuses articulations nécessaires conduisent à des prix de revient élevés.

Un premier objet de la présente invention est de proposer un balai d'essuie-glace dans lequel tous les éléments mécaniques de répartition de la pression sont intégrés dans un carénage. Ainsi, le mécanisme de répartition de la pression n'est pas apparent.

Un second objet de la présente invention est de proposer un balai d'essuie-glace dont la construction soit simplifiée par rapport à celle des balais précédemment connus.

Selon la présente invention, le balai d'essuie-glace comprenant un carénage présentant une section transversale en forme de U inversé et renfermant entre ses ailes un ressort de rappel, une armature reliée au carénage sur laquelle est articulé au moins un étrier de répartition de pression dont la partie inférieure est reliée à une lame d'essuyage (Balai du type divulgué dans EP-A-0 280 149), est caractérisé en ce que le carénage est constitué d'une pièce montée sur une tête d'entraînement et d'au moins une autre pièce articulée sur la précédente pièce par un axe d'articulation et constituant un étrier dont une première partie forme une partie extérieure du carénage et dont la seconde partie est recouverte par la pièce qui la précède en pouvant pivoter à l'intérieur de la pièce précédente.

Ainsi, tous les éléments mécaniques sont intégrés entre les ailes du U qui est articulé autour d'axes transversaux et seule la lame de nettoyage fait saillie à la partie inférieure du carénage, sa souplesse lui permettant de suivre les déformations du carénage. Par ailleurs, l'articulation du carénage autorise l'utilisation de matière plastique moulée relativement rigide et résistante.

De plus, le carénage est ainsi articulé en un ou plusieurs points qui constituent également des axes de pivotement pour les étriers de répartition de pression ce qui permet des économies sur le montage des axes.

D'autres caractéristiques et avantages de l'invention apparaîtront au cours de la description qui va suivre d'un mode de réalisation particulier, donné uniquement à titre d'exemple non limitatif en regard des figures qui représentent :
- La figure 1, une vue en coupe horizontale d'un bras d'essuie-glace selon l'invention ;
- La figure 2, une vue du même bras en coupe verticale selon la ligne II-II de la Fig. 1.

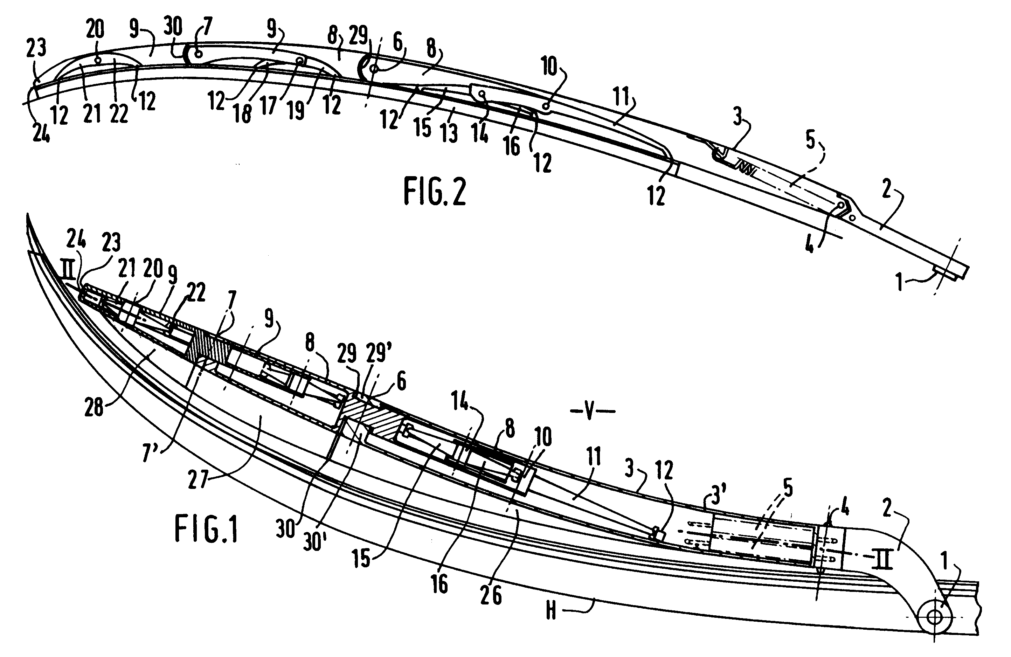

Sur la figure 1, on distingue la carrosserie H à la partie supérieure duquel fait saillie l'arbre de sortie (non représenté) d'un mécanisme d'entraînement alternatif sur lequel est fixée la tête 1 de l'essuie-glace. A partir de la tête 1 s'étend un levier 2 d'essuie-glace. Sur l'extrémité libre du levier 2 est monté pivotant,dans une direction orthogonale à celle de l'arbre de sortie, un carénage 3. Le carénage 3 est monté sur le levier par exemple au moyen d'un rivet 4. Comme connu en soi, le carénage 3 est appliqué contre la vitre V par un ressort ou un ensemble de ressorts 5. Le pivotement autour de l'axe 4 constitué par le rivet permet de dégager le balai de la surface de la vitre à nettoyer en vue d'un entretien de celle-ci.

Conformément à l'invention, le carénage 3 qui joue le rôle d'armature du balai d'essuie-glace est constitué d'une pièce 3′ qui se prolonge vers la gauche (sur les figures) par deux parties 8 et 9, la partie 8 étant articulée en 6 sur la pièce 3′ et la partie 9 en 7 sur l'extrémité de la partie 8 opposée à l'axe 6. Les pièces 8 et 9 présentent des moyeux 29 et 30 s'appliquant contre des paliers correspondants 29′,30′ formés aux extrémités de la pièce adjacente de manière à permettre un débattement de l'ordre d'une dizaine de degrés.

Les axes 6 et 7 servent non seulement à l'articulation des pièces 8 et 9 constituant, avec la pièce 3′, le carénage, mais également à l'articulation de certains étriers, palonniers ou balanciers de répartition de la pression sur la vitre à essuyer. Les pièces 8 et 9 constituent elles-mêmes des étriers principaux sur lesquels sont articulés des étriers secondaires. Mais ces étriers principaux 8 et 9 constituent également une partie du carénage 3. En effet, autour de l'axe 6, la partie gauche (sur la figure 2) de la pièce 8 est apparente, alors que la partie droite de cette même pièce est recouverte par la pièce 3′ et peut pivoter à l'intérieur de ladite pièce. La section de la partie gauche de la pièce 8 présente une section transversale en "U" inversé alors que sa partie droite peut être constituée de deux tiges parallèles . Il en va de même de la pièce 9.

Comme cela apparaît sur les figures, à l'extrémité droite de l'étrier principal 8 est monté sur une chape 10 un balancier 11 à deux branches. Ce balancier se termine à la partie inférieure de l'une de ses extrémités par une griffe 12 pouvant s'insérer dans une rainure prévue à la partie supérieure de la lame d'essuyage 13. Tous les balanciers ou étriers dont il sera fait mention par la suite présentent de telles griffes qui ont pour but de fixer définitivement la lame 13 qui n'est pas amovible. A l'extrémité du balancier 11 opposée par rapport à l'axe 10 est prévue une chape 14 sur laquelle est monté pivotant un étrier secondaire à deux branches 15 et 16, reliées à leurs parties inférieures à la lame 13 par des griffes 12.

A l'extrémité gauche de l'étrier principal 8 est formée une chape 7′ dans laquelle est montée à pivotement la pièce 9. Comme précédemment, la partie gauche de la pièce 9 est apparente et forme une partie du carénage 3 alors que la partie droite est recouverte par la pièce 8. La branche située à droite de la pièce 9 comporte à son extrémité une chape 17 sur laquelle est monté à pivotement un étrier secondaire composé de deux branches 18 et 19. Enfin, à l'intérieur de la partie gauche de la pièce 9 un axe de pivotement 20 reçoit un étrier secondaire à deux branches respectivement 21 et 22 reliées à la lame 13. Par ce système d'étriers, et en raison de son articulation, le carénage 3 peut se déformer progressivement tout en conservant une pression uniforme sur la vitre, quelle que soit la courbure du pare-brise. Le carénage se referme en 23 sur la lame 13 en étant formé par une paroi 24 issue de l'extrémité libre de l'étrier 9.

Ainsi, le nombre d'articulations théoriquement nécessaire peut être réduit ce qui allège très sensiblement les coûts de fabrication.

L'ensemble est ainsi complètement caréné. Grâce aux articulations 6 et 7, le carénage 3 peut être réalisé en une matière moulée relativement rigide. Lors du moulage il est possible de former à la partie inférieure du carénage, et comme cela apparaît sur la figure 1 des déflecteurs 26, 27, 28 permettant le maintien de l'adhérence de la lame 13 sur la vitre lorsque le véhicule circule à grande vitesse. En effet dans ce cas, la pression de l'air a tendance à décoller les balais de la vitre par soulèvement de ceux-ci ce qui nuit à une action efficace d'essuyage.

Dans l'exemple qui vient d'être donné, le nombre d'articulations du carénage est de deux, mais ce nombre peut varier en fonction de la longueur désirée du balai d'essuie-glace. Dans certains cas, une seule articulation peut suffire. Par ailleurs, le système mécanique de répartition de pression peut être composé d'une disposition quelconque d'étriers principaux et secondaires. C'est ainsi, par exemple, que l'on peut monter sur l'articulation 7 un ensemble mécanique d'étriers du même type que celui qui est monté sur l'articulation 6.

De plus, il peut être envisagé soit que le carénage 3 s'étende sur la majeure partie de la lame d'essuie-glace ou qu'il s'étende sur toute la longueur de ladite lame.

Il va de soi que de nombreuses variantes peuvent être introduites, notamment par substitution de moyens techniquement équivalents sans pour autant sortir du cadre de l'invention, du moment que l'invention soit celle définies dans les revendications.

## Revendications

1. Balai d'essuie-glace comprenant un carénage (3) présentant une section transversale en forme de U inversé et renfermant entre ses ailes un ressort de rappel (5), une armature reliée au carénage, sur laquelle est articulé au moins un étrier de répartition de pression dont la partie inférieure est reliée à une lame d'essuyage (13), caractérisé en ce que le carénage (3) est constitué d'une pièce (3') montée sur une tête d'entraînement (1,2) et d'au moins une autre pièce (8,9) articulée sur la précédente pièce (8,3') par un axe d'articulation (6,7) et constituant un étrier (8,9) dont une première partie forme une partie extérieure du carénage (3) et dont la seconde partie est recouverte par la pièce (8,3') qui la précède en pouvant pivoter à l'intérieur de la pièce précédente (8,3).

2. Balai d'essuie-glace selon la revendication 1, caractérisé en ce que le carénage (3) s'étend sur la majeure partie de la lame d'essuyage (13).

3. Balai d'essuie-glace selon la revendication 1, caractérisé en ce que le carénage (3) s'étend sur toute la longueur de la lame d'essuyage (13).

4. Balai d'essuie-glace selon l'une quelconque des revendications précédentes, caractérisé en ce que l'un des étriers (9) porte à son extrémité libre une paroi de fermeture (24) du carénage (3).

5. Balai d'essuie-glace selon l'une quelconque des revendications précédentes, caractérisé en ce que, à l'une au moins des parties inférieures du carénage (3, 3',8, 9) sont prévus des rebords (26, 27, 28) formant déflecteurs.

## Claims

1. A screen wiper blade comprising a shroud (3) having a transverse cross section in the form of an inverted U and enclosing a return spring (5) between its flanks, an armature connected with the shroud, on which there is articulated at least one pressure distributing yoke, the lower part of which is connected to a wiping strip (13), characterised in that the shroud (3) comprises a member (3') mounted on a drive head (1, 2), and at least one further member (8, 9), articulated on the above mentioned member (8, 3') by means of a pivot pin (6, 7) and constituting a yoke (8, 9), a first portion of which defines an outer portion of the shroud (3), and a second portion of which is covered by the member (8, 3') that precedes it, being pivotable within the previously mentioned member (8, 3).

2. A screen wiper blade according to Claim 1, characterised in that the shroud (3) extends over the greater part of the wiping strip (13).

3. A screen wiper blade according to Claim 1, characterised in that the shroud (3) extends over the whole length of the wiping strip (13).

4. A screen wiper blade according to any one of the preceding Claims, characterised in that one of the yokes (9) carries at its free end a closure wall (24) of the shroud (3).

5. A screen wiper blade according to any one of the preceding Claims, characterized in that flanges (26, 27, 28), defining deflectors, are arranged in at least the lower portions of the shroud (3, 3', 8, 9).

## Patentansprüche

1. Scheibenwischerblatt, enthaltend eine Verkleidung (3), die einen Querschnitt in Form eines umgekehrten U aufweist und zwischen ihren Schenkeln eine Rückzugfeder (5) umschließt, sowie eine mit der Verkleidung verbundene Fassung, an der mindestens ein Bügel zur Druckverteilung angelenkt ist, dessen unterer Teil mit einer Wischerleiste (13) verbunden ist , **dadurch gekennzeichnet,** daß die Verkleidung (3) aus einem an einem Antriebskopf (1, 2) angebrachten Stück (3') und aus mindestens einem anderen Stück (8, 9) besteht, das durch eine Gelenkachse (6, 7) an dem vorangehenden Stück (8, 3') angelenkt ist und einen Bügel (8, 9) bildet, dessen erster Teil ein Außenteil der Verkleidung (3) darstellt und dessen zweiter Teil durch das davor angeordnete Stück (8, 3') überdeckt wird, wobei es im Innern des vorangehenden Stücks (8, 3) schwenkbar ist.

2. Scheibenwischerblatt nach Anspruch 1, **dadurch gekennzeichnet,** daß sich die Verkleidung (3) über den größten Teil der Wischerleiste (13) erstreckt.

3. Scheibenwischerblatt nach Anspruch 1, **dadurch gekennzeichnet,** daß sich die Verkleidung (3) über die gesamte Länge der Wischerleiste (13) erstreckt.

4. Scheibenwischerblatt nach einem der vorangehenden Ansprüche, **dadurch gekennzeichnet**, daß einer der Bügel (9) an seinem freien Ende eine Abschlußwand (24) der Verkleidung (3) trägt.

5. Scheibenwischerblatt nach einem der vorangehenden Ansprüche, **dadurch gekennzeichnet**, daß zumindest in einem der unteren Teile der Verkleidung (3, 3', 8, 9) als Windabweiser dienende Kanten (26, 27, 28) vorgesehen sind.
